# EUROPÄISCHE PATENTSCHRIFT

(11) **EP 1 270 518 B1**
(45) Veröffentlichungstag und Bekanntmachung des Hinweises auf die Patenterteilung: **13.04.2005**
(21) Anmeldenummer: 02450141.3
(22) Anmeldetag: 25.06.2002
(51) Int. Cl.: C02F 3/34, C02F 1/52

(54) **Verfahren zur biologischen Reinigung kommunaler Abwässer**
Process for biological purification of municipal waste water
Procédé d épuration biologique d eaux usées urbaines

(30) Priorität: 27.06.2001 AT 9962001
(43) Veröffentlichungstag der Anmeldung: 02.01.2003
(73) Patentinhaber: Kubinger, Ulrich, 4675 Weibern (AT)
(72) Erfinder: Kubinger, Ulrich, 4675 Weibern (AT)
(74) Vertreter: Hübscher, Helmut, Dipl.-Ing.

(56) Entgegenhaltungen:
- WO-A-93/25480
- DE-A- 4 031 069
- DATABASE WPI Section Ch, Week 199420 Derwent Publications Ltd., London, GB; Class D15, AN 1994-163306 XP002216770 & JP 06 106188 A (NIPPON STEEL CORP), 19. April 1994 (1994-04-19)
- PATENT ABSTRACTS OF JAPAN vol. 2000, no. 13, 5. Februar 2001 (2001-02-05) & JP 2000 288565 A (KURITA WATER IND LTD), 17. Oktober 2000 (2000-10-17)
- DATABASE WPI Section Ch, Week 200047 Derwent Publications Ltd., London, GB; Class D15, AN 2000-517189 XP002216771 & JP 2000 167596 A (KONAN KAGAKU KOGYO KK) , 20. Juni 2000 (2000-06-20)

## Beschreibung

Die Erfindung bezieht sich auf ein Verfahren zur biologischen Reinigung kommunaler Abwässer, die in wenigstens einem Verfahrensschritt mit Belebtschlamm behandelt und in einem anschließenden Verfahrensschritt von mitgeführten Belebtschlammresten befreit werden, wobei den Abwässern außerhalb der Verfahrensschritte gezüchtete Mikroorganismen zudosiert werden.

Die biologische Reinigung kommunaler Abwässer erfolgt im wesentlichen mit Hilfe der im Belebtschlamm enthaltenen Mikroorganismen, die in Schlammflocken als Träger und Aufwuchsfläche eingebunden vorliegen und daher mit den Schlammflocken aus den gereinigten Abwässern abgeschieden und bei einer kontinuierlichen Abwasserbehandlung im Kreislauf wieder einer vorgeordneten Verfahrensstufe zugeführt werden. Die durch diese Kreistaufführung bedingte Anreicherung der Mikroorganismen im Belebtschlamm bringt eine entsprechende Reinigungsleistung mit sich. Reicht die durch den Belebtschlamm vorgegebene Reinigungsleistung nicht für die erforderliche Reinigung der anfallenden Abwässer aus, weil beispielsweise Abwässer mit höheren Konzentrationen an schwer abbaubaren Verbindungen oder über längere Zeiträume überdurchschnittliche Abwassermengen anfallen, werden den zu reinigenden Abwässern zusätzliche Mikroorganismen beigemengt, die außerhalb der Verfahrensstufen gezüchtet werden. Da diese Mikroorganismen als einzelne Individuen vorliegen und nicht in Schlammflocken eingebunden sind, besteht bei von den Abwässern durchflossenen Klärbecken die Gefahr, daß die zudosierten Mikroorganismen mit den Abwässern aus den Klärbecken ausgetragen werden und wegen ihrer geringen Sinkgeschwindigkeit auch nicht in den zum Abscheiden von Belebtschlammresten vorgesehenen Nachklärbecken zurückgehalten werden können, um mit den Belebtschlammresten in die Klärbecken rückgeführt zu werden. Dies bedeutet, daß die den Abwässern zusätzlich beigemengten Mikroorganismen nicht in ausreichender Anzahl in die Biozönose des Belebtschlammes eingefügt werden können, um die Reinigungswirkung nachhaltig zu beeinflussen. Eine mögliche Maßnahme, das Austragen der den Abwässern zugegebenen Mikroorganismen aus dem Schlammkreislauf durch die behandelten Abwässer zu unterbinden, könnte darin bestehen, die Mikroorganismen auf einem Träger mit großer Oberfläche, beispielsweise Zeolithe oder Aktivkohle, aufwachsen zu lassen und zusammen mit dem Träger den Abwässern zuzuführen, so daß die Mikroorganismen mit dem sich zusammen mit dem Belebtschlamm absetzenden Trägermaterial aus den gereinigten Abwässern abgeschieden und einer vorhergehenden Verfahrensstufe zurückgeführt werden können. Diese Möglichkeit scheidet allerdings im allgemeinen für die Reinigung kommunaler Abwässer aus, weil durch das Trägermaterial der für die Abwasserreinigung keinen Beitrag leistende Anteil an anorganischen Stoffen im Belebtschlamm stark ansteigt. Ähnliche Schwierigkeiten ergeben sich, wenn das Abwasser nicht kontinuierlich in aufeinanderfolgend durchströmten Verfahrensstufen, sondern diskontinuierlich beispielsweise in einem Reaktor nacheinander den sonst in den einzelnen Verfahrensstufen durchgeführten Verfahrensschritten unterworfen werden.

Der Erfindung liegt somit die Aufgabe zugrunde, ein Verfahren zur biologischen Reinigung kommunaler Abwässer der eingangs geschilderten Art so auszubauen, daß die Reinigungsleistung durch ein vorteilhaftes Zuführen von außerhalb der Verfahrensschritte gezüchteten Mikroorganismen wirkungsvoll gesteigert werden kann.

Die Erfindung löst die gestellte Aufgabe dadurch, daß die außerhalb der Verfahrensschritte gezüchteten Mikroorganismen zusammen mit einem Flockungsmittel auf der Basis einer polymerisierten Metallhydroxidverbindung den Abwässern zudosiert werden.

Durch die gemeinsame Zugabe eines Flockungsmittels der angegebenen Art und der Mikroorganismen kommt es aufgrund der metallischen Komponente des Flockungsmittels zu einer Flockenbildung in unmittelbarer Nähe der Mikroorganismen, die die sich bildenden Flocken als Träger und Aufwuchsflächen nützen können. Während des Flockungsvorganges aus den Abwässern eingebundene organische, partikuläre Stoffe stehen den Mikroorganismen sofort als Nahrung zur Verfügung, was vorteilhafte Aufwachsbedingungen schafft. Die außerhalb der Verfahrensschritte gezüchteten, dem Abwasser zusammen mit dem ausgewählten Flockungsmittel zugegebenen Mikroorganismen werden somit in die Biozönose des Belebtschlammes eingebaut und können in Verbindung mit den anderen Mikroorganismen des Belebtschlammes eine entsprechende Reinigungswirkung entfalten.

Besonders vorteilhafte Flockungsbedingungen können dadurch erreicht werden, daß den außerhalb der Verfahrensschritten gezüchteten Mikroorganismen zusätzlich zum Flockungsmittel ein organisches Polymer beigemengt wird. Durch ein solches organisches Polymer wird der Zusammenschluß der durch die Metallverbindungen des Flockungsmittels im Abwasser entstehenden Hydroxidflocken mit partikulären Stoffen und Belebtschlammflocken zu größeren, gut sedimentierbaren Einheiten unterstützt. Wird hiefür quarternäres Amin mit positiver Ladung als organisches Polymer eingesetzt, so kann das Auftreten von Bläh- und Schwimmschlamm wirkungsvoll unterbunden werden. Durch die Zugabe eines Gemisches aus einem Flockungsmittel auf der Basis einer polymerisierten Metallhydroxidverbindung und eines quarternären Amins mit positiver Ladung können nämlich die Ladungsverhältnisse im Oberflächenbereich der für das Entstehen von Bläh- und Schwimmschlamm verantwortlichen Fadenbakterien so verändert werden, daß sie für flockenbildende Bakterien besiedelbar werden. Für die flockenbildenden Bakterien entsteht somit trotz ihrer vergleichsweise niedrigen Wachstumsrate ein Wachstumsvorteil gegenüber den Fadenbakterien, die zunehmend in die entstehenden Schlammflocken eingebunden werden und damit ihren nachteiligen Einfluß auf das Absetzverhalten der Schlammflocken verlieren. Außerdem können aufgrund der Ladungsänderung auf der Oberfläche der Fadenbakterien die als Nährstoffe für die Bakterien dienenden abzubauenden Stoffe besser in die Schlammflocken eingebunden werden.

Um zu verhindern, daß die auf den Abbau bestimmter Schadstoffe spezialisierten Mikroorganismen zwischen zeitlich auseinanderliegenden Abwasserbelastungen mit diesen Schadstoffen von anderen Mikroorganismen verdrängt werden und dann im Bedarfsfall nicht mehr in einem ausreichenden Maß zur Verfügung stehen, empfiehlt es sich, die Mischung aus Mikroorganismen und Flockungsmittel kontinuierlich den Abwässern zuzudosieren. Damit kann eine für den Bedarfsfall ausreichende Menge an spezialisierten Mikroorganismen für den Abbau bestimmter Schadstoffe im Belebtschlamm sichergestellt werden. Die damit verbundene kontinuierliche Zudosierung des Flokkungsmittels kann insbesondere im Hinblick auf die Unterdrückung von Blähund Schwimmschlamm gleichbleibend günstige Verhältnisse schaffen. Da die metallische Komponente des Flockungsmittels zu einer Phosphatfällung führt, wird eine kontinuierliche Zufuhr des Flockungsmittels zu diesem Zweck ohnehin notwendig.

Die Zusammensetzung der den Abwässern beizumengenden Mikroorganismen kann in Abhängigkeit von der Abwasserbelastung unterschiedlich ausfallen, wie es auch möglich ist, das Flockungsmittel in unterschiedlicher Weise an die verschiedenen Abwasserbelastungen bzw. die Lebensbedingungen der jeweils zum Einsatz kommenden Mikroorganismen anzupassen. So können beispielsweise bei Kläranlagen mit unzureichender oder nicht vorhandener Nitrifikation Mikroorganismen dem Abwasser beigemengt werden, die vor allem Nitrifikanten umfassen. Das Flockungsmittel wird in diesem Fall einen erhöhten Anteil an organischen Polymeren aufweisen, um die Bildung großer, kompakter und gut sedimentierbarer Flocken zu unterstützen, was zu einem Anheben des Schlammalters in der Kläranlage führt und damit die Ansiedlung der Nitrifikanten zusätzlich begünstigt.

Ist bei zu klärenden Abwässern mit einem erhöhten Anteil an organischen Säuren zu rechnen, wie sie aus der Lebensmittelindustrie stammen können, so werden den Abwässern bevorzugt Mikroorganismen beigefügt, die besonders wirkungsvoll Kohlenstoff abbauen. Erhöhten Phosphorzulauffrachten kann wiederum durch einen gesteigerten Anteil an polymerisierten Metallhydroxidverbindungen Rechnung getragen werden, die die Phosphatausfällung unterstützen.

In einem weiteren Anwendungsbeispiel kann als Flockungsmittel ein Polyaluminiumhydroxidchlorid mit einem quarternären Amin, insbesondere einem Polyethylendiamin, in einer entsprechenden Menge zur Unterdrückung des Schäumens im Faulturm einer Kläranlage zudosiert werden, weil dieses Flockungsmittel die Wirkung der den Schaum verursachenden Fadenbakterien bekämpft. Um die durch die Wirkung der Fadenbakterien verringerte Faulgasproduktion zu erhöhen, können diesem Flockungsmittel vorteilhaft anaerobe Mikroorganismen beigegeben werden.

Die Zugabe der Mikroorganismen und des Flockungsmittels kann bei kontinuierlicher Abwasserbehandlung je nach Aufgabenstellung an unterschiedlichen Stellen im Bereich unterschiedlicher Verfahrensstufen beigefügt werden, weil ja mit einer Kreislaufführung des Belebtschlammes gerechnet werden muß.

## Patentansprüche

1. Verfahren zur biologischen Reinigung kommunaler Abwässer, die in wenigstens einem Verfahrensschritt mit Belebtschlamm behandelt und in einem anschließenden Verfahrensschritt von mitgeführten Belebtschlammresten befreit werden, wobei den Abwässern außerhalb der Verfahrensschritte gezüchtete Mikroorganismen zudosiert werden, **dadurch gekennzeichnet, daß** die außerhalb der Verfahrensschritte gezüchteten Mikroorganismen zusammen mit einem Flockungsmittel auf der Basis einer polymerisierten Metallhydroxidverbindung den Abwässern zudosiert werden.

2. Verfahren nach Anspruch 1, **dadurch gekennzeichnet, daß** den außerhalb der Verfahrensschritte gezüchteten Mikroorganismen zusätzlich ein organisches Polymer beigemengt wird.

3. Verfahren nach Anspruch 2, **dadurch gekennzeichnet, daß** den außerhalb der Verfahrensschritte gezüchteten Mikroorganismen quarternäres Amin mit positiver Ladung als organisches Polymer beigemengt wird.

4. Verfahren nach einem der Ansprüche 1 bis 3, **dadurch gekennzeichnet, daß** die Mischung aus Mikroorganismen und Flockungsmittel kontinuierlich den Abwässern zudosiert wird.

## Claims

1. A process for biological purification of municipal waste water which is treated with activated sludge in at least one process step and is freed from entrained activated sludge residues in a second process step, wherein metered amounts of micro-organisms cultivated outside the process steps are added to the waste water, **characterised in that** the metered amounts of micro-organisms cultivated outside the process steps are added to the waste water together with a flocculant based on a polymerised metal hydroxide compound.

2. A process according to claim 1, **characterised in that** an organic polymer is additionally mixed with the micro-organisms cultivated outside the process steps.

3. A process according to claim 2, **characterised in that** the organic polymer mixed with the micro-organisms cultivated outside the process steps is a positively charged quaternary amine.

4. A process according to any of claims 1 to 3, **characterised in that** the mixture of micro-organisms and flocculant is continuously added in metered amounts to the waste water.

## Revendications

1. Procédé d'épuration biologique d'eaux usées urbaines, traitées en au moins une étape de procédé avec de la boue activée, et débarrassées des restes de boue activée lors d'une étape de procédé subséquente, des micro-organismes, cultivés hors des étapes de procédé, étant ajoutés en plus aux eaux usées, **caractérisé en ce que** les micro-organismes, cultivés hors des étapes de procédé, sont ajoutés de façon dosée aux eaux usées, conjointement avec un agent floculant à base d'une combinaison d'hydroxyde métallique polymérisée.

2. Procédé selon la revendication 1, **caractérisé en ce qu'**un polymère organique est ajouté en plus en mélange aux micro-organismes, cultivés hors des étapes de procédé.

3. Procédé selon la revendication 2, **caractérisé en ce qu'**une amine quaternaire, à charge positive, est ajoutée en plus, en tant que polymère organique, en mélange aux micro-organismes, cultivés hors des étapes de procédé.

4. Procédé selon l'une des revendications 1 à 3, **caractérisé en ce que** le mélange, composé de micro-organismes et d'agent floculant, est ajouté de façon dosée, en continu, aux eaux usées.
